# EUROPEAN PATENT SPECIFICATION

(11) **EP 0 435 832 B1**
(45) Date of publication and mention of the grant of the patent: **22.02.1995**
(21) Application number: 90830539.4
(22) Date of filing: 20.11.1990
(51) Int. Cl.: F16H 61/16

(54) **A device for operating a motor vehicle gearbox**
Vorrichtung zum Bedienen eines Kraftfahrzeuggetriebes
Dispositif de commande d'une boîte de vitesses d'un véhicule automobile

(30) Priority: 20.12.1989 IT 6813689
(43) Date of publication of application: 03.07.1991
(73) Proprietor: FIAT AUTO S.p.A., 10135 Torino (IT)
(72) Inventor: Montanaro, Enrico, I-10095 Grugliasco (Torino) (IT)
(74) Representative: Saconney, Piero

(56) References cited:
- DE-A- 3 011 131
- US-A- 3 690 193

## Description

The present invention relates to a device for operating a motor vehicle gearbox with several forward gears and one reverse gear, according to the preamble of Claim 1.

Document DE-A-3 011 131 discloses a device of this kind which includes i.a. restraining means for preventing the shaft from moving to the end position and means for the controlled release of the restraining means.

In this known device the restraining means are in the form of a pin and a slot. The pin is retractably mounted in the casing of the gearbox. The slot is provided in a restraining yoke which is associated to the entrainment member and which is slidable together with the shaft. The yoke has a further slot and the casing of the gearbox has a fixed pin which is permanently engaged in the further slot to prevent the yoke from rotating.

This known arrangement is relatively bulky and is likely to show undesirable angular plays between the pins and the slots.

The object of the present invention is to provide an operating device of the type defined in the preamble of claim 1, particularly for use in a gearbox with six forward gears, which is particularly compact, free from angular plays and which has a high degree of security both against the risk of the undesired engagement of the reverse gear and against the risk of accidental movements of the entrainment members.

According to the invention this object is attained by an operating device as defined in the characterising portion of claim 1.

This arrangement enables the operating device to be particularly compact, its bulk in the case of application to a gearbox with six forward gears being comparable to that of a device for application to a gearbox with four or five forward gears.

The coupling between the prismatic guide of the fixed support and the prismatic body allows to avoid undesirable angular plays.

The risk of accidental movements of the entrained members is avoided thanks to the cooperation between the guide appendages of the forked elements and the entrained members.

Further characteristics and advantages of the invention will become clear in the course of the detailed description which follows with reference to the appended drawings, provided purely by way of non-limiting example, in which:
Figure 1 is a sectional view of an operating device according to the invention,
Figure 2 is a partially-sectioned view taken on the arrow II of Figure 1,
Figure 3 is a section taken on the line III-III of Figure 2, on an enlarged scale, and
Figure 4 is a partially-exploded perspective view of Figure 2.

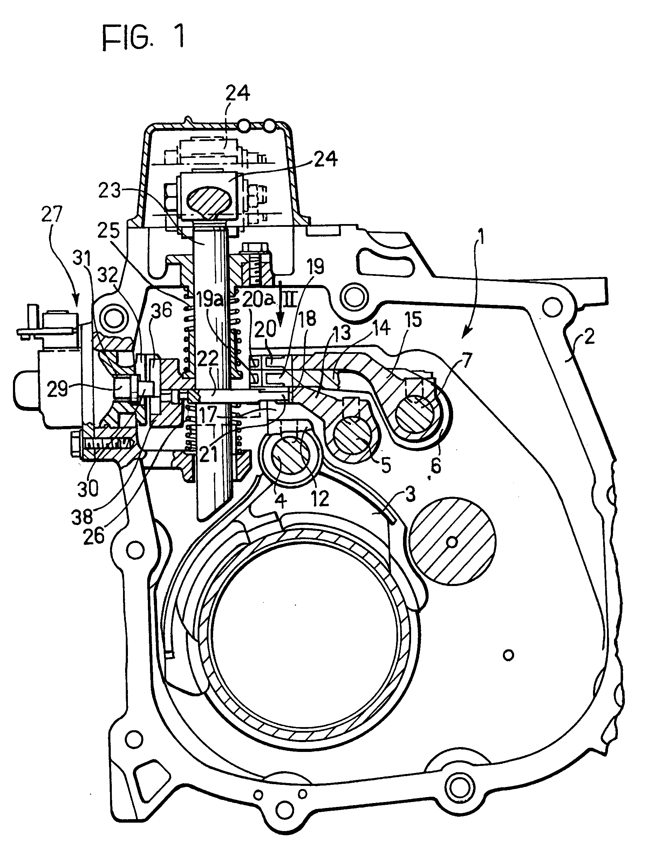

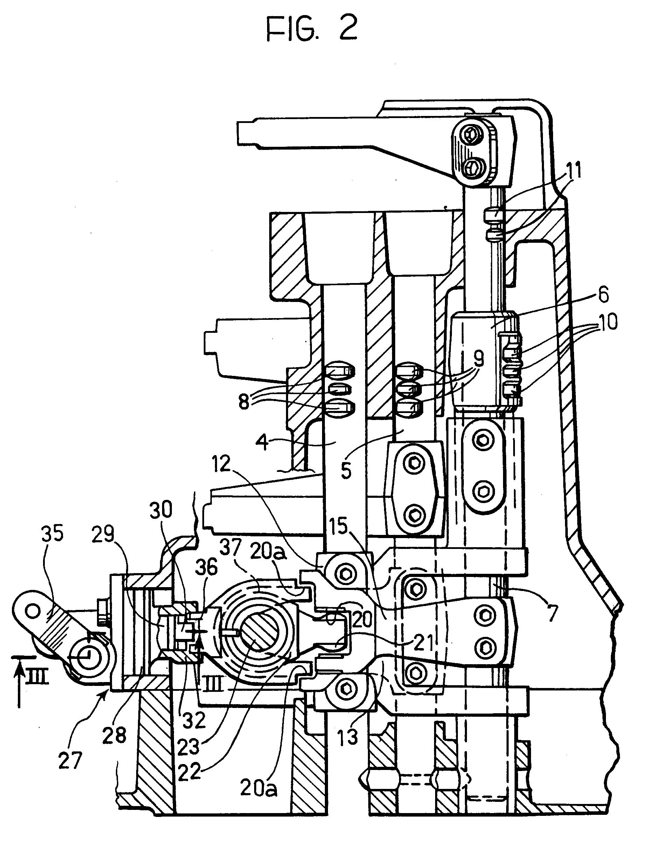

With reference initially to Figures 1 and 2, a device for operating a motor vehicle gearbox is generally indicated 1 and is situated within the gearbox housing 2.

The structure of the gearbox with which the device 1 is associated is not shown in the drawings since it is of generally conventional type. In particular, the gearbox comprises a set of pairs of permanently-meshed gears and synchronising devices for the engagement of the various gear ratios.

In the embodiment illustrated, the gearbox includes six forward gear ratios and one reverse gear ratio.

The synchronising devices which control the engagement of the gear ratios are operated, also in known manner, by means of forks, one of which is indicated 3 in Figure 1. The fork 3 controls the engagement of the first and second gears of the gearbox and is fixed to a rod 4 mounted slidably in the gearbox housing 2. Similarly, two further rods 5, 6 slidable parallel to the rod 4 are provided for engaging the third and fourth and fifth and sixth gear ratios, the second rod 6 being tubular. A fourth rod 7 is provided for engaging the reverse gear and is mounted for sliding coaxially through the tubular rod 6.

Each of the rods 4, 5 and 6 is movable to opposite sides of a central, neutral position, into first or second operative positions which correspond to the engagement of one or other of the two corresponding forward gear ratios. The rod 7, however, is movable from an inoperative position to an operative position for engaging reverse gear, and vice versa.

As shown in detail in Figure 2, each rod 4, 5, 6 and 7 has respective locating notches 8, 9, 10 and 11 for cooperating in known manner with ball members or the like (not shown) which are urged resiliently against the respective rods to snap-lock them in the set position (neutral or operative).

A respective arm 12, 13, 14 and 15 is keyed to each of the rods 4, 5, 6 and 7 for controlling its translation. These arms form respective adjacent seats 17, 18, 19 and 20 aligned in a direction perpendicular to the rods 4, 5, 6 and 7. The seats 19 and 20 of the arms 14 and 15 associated with the rods 6 and 7 have respective raised guide surfaces 19a, 20a whose function will be made clear below.

The seats 17, 18, 19 and 20 are adapted to house the free end 21, with rounded sides, of an entrainment member 22 projecting radially from an operating shaft 23 and fixed thereto.

The shaft 23 is mounted for rotation about its axis and for sliding axially in the gearbox housing 2. The shaft 23 is translated and rotated by means of the usual manual gear lever (not shown) at one end 24 of the shaft 23, through a generally conventional kinematic mechanism, not shown. The selection movements of the gear lever translate the shaft 23, whilst the engagement movements imparted to the lever in order to engage the selected ratios rotate the shaft 23 in one sense or the other.

The shaft 23 is normally biassed towards the neutral position shown in Figure 1 by two opposing thrust springs 25, 26. In this position, the end 21 of the entrainment member 22 is housed in the seat 18 of the arm 13 associated with the rod 5 for engaging the third or fourth gear ratios. One or other of these ratios is engaged by the rotation of the shaft 23 in one sense or the other, and this obviously results in a translation of the rod 5 in one direction or the other from its central, neutral position.

The first and second or fifth and sixth gear ratios are selected by a corresponding translation of the shaft 23 to engage the end 21 of the entrainment member 22 in the seat 17 of the arm 12 or in the seat 19 of the arm 12 or 14, respectively. One or other of the pair of ratios selected is subsequently engaged, as described above, as a result of the rotation of the shaft 23 in one sense or the other.

In order to select and then engage the reverse gear, the shaft 23 must be moved axially to the end position shown in broken outline in Figure 1, in which the end 21 of the entrainment member 22 engages the seat 20 of the arm 15. The movement of the shaft 23 to this position is enabled only as a result of an external consent normally imparted by a suitable actuator operatively associated with the gear lever, by means of a safety device, generally indicated 27.

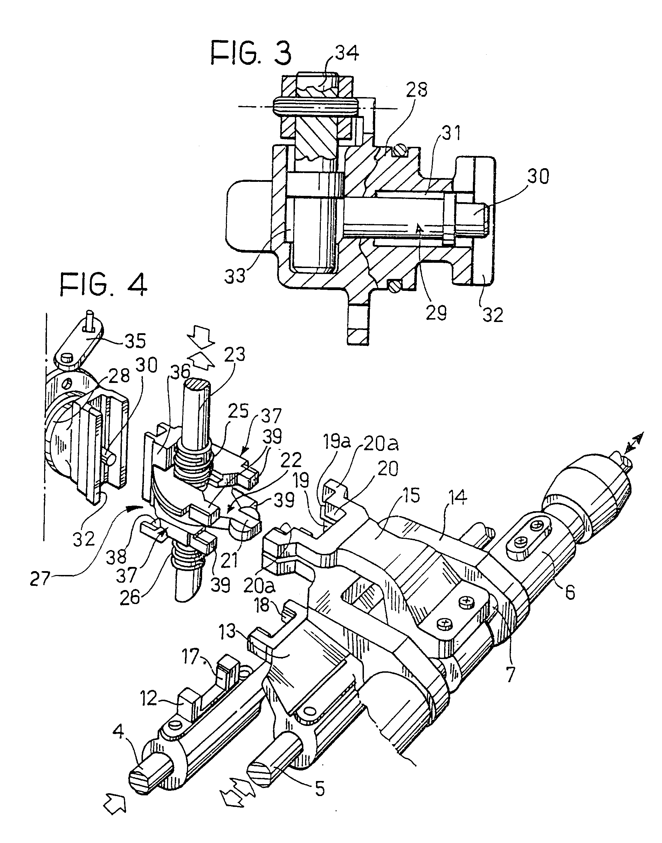

The device 27 is shown in greater detail in Figures 3 and 4 and comprises a hollow support 28 which is fixed to the gearbox housing 2 and in which a stop pin 29 is slidable axially perpendicular to the shaft 23 and the rods 4-7. One end of the stop pin forms a catch member 30 which is normally biassed by a thrust spring 31 within the support 28 to a position in which it projects into a hollow, prismatic guide part 32 formed at the end of the body 28 facing the operating shaft 23. The opposite end region of the pin 29 cooperates with a cam member 33 carried by a rotatable shaft 34 arranged transverse the pin 29 and projecting from the support 28 with a connecting lever 35 in turn connected to the actuator associated with the gear lever by means of a kinematic mechanism, not shown but within the capabilities of an expert in the art. The operation of the connecting lever 35 causes the shaft 34 to rotate and, through the cam 33, the pin 29 and its catch end 30 to be retracted inwardly of the support 28 against the action of the spring 31.

A complementary prismatic slider 36 is engaged for sliding in the prismatic guide part 32 of the support 28 parallel to the direction of movement of the shaft 23 and is fixed to a pair of fork elements 37 arranged astride the shaft 23 on opposite sides of the entrainment member 22. The two fork elements 37, and hence the prismatic slider 36, are thus fixed for translation with the shaft 23, whilst the latter can rotate freely relative thereto.

The slider 36 is closed at one end by a transverse wall 38 which constitutes an abutment for cooperating with the catch end 30 of the pin 29 in the manner made clear below.

The free ends of each fork element 37 define two guide appendages 39 for slidably engaging the guide appendages 19a, 20a of the arms 14 and 15 associated with the hollow rod 6 and the rod 7 respectively.

The two springs 25 and 26 for centring the shaft 23 act between the housing 2 and the respective opposite faces of the assembly formed by the entrainment member 22 and the two fork elements 37.

The axial position of the pin 29 relative to the path of movement of the shaft 23 is such that its catch end 30 intercepts the abutment 38 when the shaft 23 is moved from the position for selecting the fifth and sixth forward gear ratios to the position for selecting reverse, that is, from the condition in which the end 21 of the entrainment member 22 is engaged in the seat 19 of the arm 14 to the position in which the end 21 is engaged in the seat 20 of the arm 15. The shaft 23 is allowed to move to that position to engage the reverse gear, as stated, only as a result of the retraction of the pin 29 into the support 28 so as to release the catch end 30 from the abutment 38 and thus enable the prismatic slider 36 to pass. In the position for selecting or engaging the reverse gear, the pin 29 is kept in the retracted condition by the abutment 38 which is in frontal contact with the catch end 30.

When the shaft 23 is returned to the positions for selecting the forward gears after the reverse gear has been disengaged, the abutment 38 releases the pin 29 and the latter is automatically thrust towards its advanced position by its spring 31.

The guide appendages 39 of the fork elements 37 act as safety members for preventing accidental movements of the arm 14 during the operation of the arm 13, accidental movements of the arms 13 and 15 during the operation of the arm 14, and accidental movements of the arm 14 during the operation of the arm 15.

## Claims

1. A device for operating a motor vehicle gearbox with several forward gears and one reverse gear, including a rotatable and axially slidable shaft for operating, by means of a radial entrainment member fixed thereto, adjacent entrained members fixed for translation with respective slidable rods in order to engage the forward gears and the reverse gear, comprising an entrained member (15) for engaging the reverse gear which is separate from those (12, 13, 14) for engaging the forward gears and can be engaged by the entrainment member (21) in correspondence with an axial end position of the shaft (23), and in which restraining means (27) are provided for preventing the shaft (23) from moving to the end position and means (35) for the controlled release of the restraining means (27), further comprising an abutment (38) which is fixed for translation with the shaft (23) but relative to which the shaft (23) can rotate, a catch member (30) movable between an advanced stop position in which it projects into the path of movement of the abutment (38) near the axial end position of the shaft (23) and an inoperative position in which it is retracted from that path of movement, and an external operating mechanism (29, 33, 34, 35) for moving the catch member (30) from the advanced position to the retracted position against the action of resilient biassing means (31), and in which the catch member (30) is formed by a pin (29) slidable radially relative to the shaft (23) in a fixed support (28) and acted upon by a spring (31) which tends to urge it towards the advanced position, characterised in that the fixed support (28) defines a prismatic guide (32) which engages a complementary prismatic body (36) forming the abutment (38) for sliding parallel to the direction of movement of the shaft (23), in that the complementary prismatic body (36) is fixed to a pair of forked elements (37) mounted on the shaft (23) on opposite sides of the entrainment member (22), and in that the forked elements (37) have respective guide appendages (39) for slidingly cooperating with at least some of the entrained members (14, 19, 15, 20) during the translation of the shaft (23).

2. A device according to claim 1, characterised in that the entrained member (15, 20) for the engaging of the reverse gear is situated adjacent the entrained member (14, 19) for engaging the highest pair of forward gear ratios, and in that the rod (6) to which the latter entrainment member is fixed is tubular and the rod (7) for engaging the reverse gear is mounted coaxially therein.

## Patentansprüche

1. Vorrichtung zum Betätigen eines Kraftfahrzeuggetriebes mit mehreren Vorwärtsgängen und einem Rückwärtsgang, umfassend eine drehbare und axial verschiebbare Welle, um mittels eines daran befestigten radialen Mitnehmerelements benachbarte mitgenommene Elemente zu betätigen, welche zur Verschiebung mit entsprechenden verschiebbaren Stangen verbunden sind, um die Vorwärtsgänge und den Rückwärtsgang einzurücken, umfassend ein mitgenommenes Element (15) zum Einrücken des Rückwärtsgangs, das von jenen (12, 13, 14) zum Einrücken der Vorwärtsgänge getrennt ist und durch das Mitnehmerelement (21) gemäß einer axialen Endstellung der Welle (23) eingerückt werden kann, und bei welcher Rückhaltemittel (27) vorgesehen sind, um zu verhindern, daß sich die Welle (23) in die Endstellung bewegt, sowie Mittel (35) zum gesteuerten Freigeben der Rückhaltemittel (27), ferner umfassend einen Anschlag (38), der an der Welle (23) verschiebefest ist, relativ zu welchem sich die Welle (23) jedoch drehen kann, ein Fangelement (30), das zwischen einer vorgeschobenen Anschlagsstellung, in der es in der Nähe der axialen Endstellung der Welle (23) in den Bewegungsweg des Anschlags (38) vorsteht, und einer Nicht-Betriebsstellung, in der es aus jenem Bewegungsweg zurückgezogen ist, bewegbar ist, und einen äußeren Betätigungsmechanismus (29, 33, 34, 35), um das Fangelement (30) gegen die Wirkung elastischer Vorspannmittel (31) aus der vorgeschobenen Stellung in die zurückgezogene Stellung zu bewegen, und bei welcher das Fangelement (30) von einem Stift (29) gebildet ist, der relativ zu der Welle (23) in einer festen Halterung (28) radial verschiebbar ist und auf den eine Feder (31) einwirkt, die ihn in die vorgeschobene Stellung zu drängen sucht, dadurch gekennzeichnet, daß die feste Halterung (28) eine prismatische Führung (32) bildet, welche mit einem komplementären, den Anschlag (38) bildenden, prismatischen Körper (36) in Eingriff ist, um parallel zur Bewegungsrichtung der Welle (23) zu gleiten, daß der komplementäre prismatische Körper (36) an einem Paar Gabelelemente (37) befestigt ist, welche auf der Welle (23) an entgegengesetzten Seiten des Mitnehmerelements (22) angebracht sind, und daß die Gabelelemente (37) jeweilige Führungsansätze (39) aufweisen zum gleitenden Zusammenwirken mit wenigstens einigen der mitgenommenen Elemente (14, 19, 15, 20) während der Verschiebung der Welle (23).

2. Vorrichtung nach Anspruch 1, dadurch gekennzeichnet, daß das mitgenommene Element (15, 20) zum Einrücken des Rückwärtsgangs dem mitgenommenen Element (14, 19) zum Einrücken des höchsten Paars Vorwärtsgänge benachbart angeordnet ist, und daß die Stange (6), an welcher letzteres mitgenommenes Element befestigt ist, rohrförmig ist und die Stange (7) zum Einrücken des Rückwärtsgangs darin angebracht koaxial ist.

## Revendications

1. Appareil de manoeuvre d'une boîte de vitesses de véhicule à moteur, ayant plusieurs rapports de marche avant et un rapport de marche arrière, comprenant un arbre rotatif et qui peut coulisser axialement, destiné à la manoeuvre, par l'intermédiaire d'un organe radial d'entraînement qui lui est fixé, d'organes entraînés adjacents qui sont fixés afin qu'ils se déplacent en translation avec des tiges coulissantes respectives de manière que les rapports de marche avant et le rapport de marche arrière soient mis en prise, comprenant un organe entraîné (15) destiné à mettre en prise la vitesse de marche arrière qui est séparée des organes (12, 13, 14) de mise en prise des rapports de marche avant et qui peut être mise en prise par l'organe d'entraînement (21) d'une manière qui correspond à une position d'extrémité axiale de l'arbre (23), et dans lequel le dispositif de retenue (27) est destiné à empêcher le déplacement de l'arbre (23) vers la position d'extrémité et un dispositif (35) est destiné à la libération commandée du dispositif de retenue (27), l'appareil comprenant en outre une butée (38) fixée afin qu'elle se déplace en translation avec l'arbre (23) mais par rapport à laquelle l'arbre (23) peut tourner, un organe d'accrochage (30) mobile entre une position avancée d'arrêt dans laquelle il dépasse sur le trajet de déplacement de la butée (38) près de la position d'extrémité axiale de l'arbre (23) et une position de repos dans laquelle il a reculé par rapport au trajet de déplacement, et un mécanisme externe de manoeuvre (29, 33, 34, 35) destiné à déplacer l'organe d'accrochage (30) de la position avancée vers la position reculée malgré l'action d'un dispositif élastique de rappel (31) et dans lequel l'organe d'accrochage (30) est formé par une broche (29) qui peut coulisser radialement par rapport à l'arbre (23) dans un support fixe (28) et qui est sous l'action d'un ressort (31) qui a tendance à le repousser vers la position avancée, caractérisé en ce que le support fixe (28) délimite un guide prismatique (32) qui est en prise avec un corps prismatique complémentaire (36) formant la butée (38) afin qu'il coulisse parallèlement à la direction de déplacement de l'arbre (23), en ce que le corps prismatique complémentaire (36) est fixé à deux éléments (37) de fourchette montés sur l'arbre (23) de part et d'autre de l'organe d'entraînement (22), et en ce que les éléments de fourchette (37) ont des accessoires respectifs de guidage (39) destinés à coopérer par coulissement avec certain au moins des organes entraînés (14, 19, 15, 20) pendant le déplacement de l'arbre (23) en translation.

2. Appareil selon la revendication 1, caractérisé en ce que l'organe entraîné (15, 20) destiné à mettre en prise le rapport de marche arrière est placé près de l'organe entraîné (14, 19), destiné à mettre en prise la paire de rapports de marche avant la plus élevée, et en ce que la tige (6) à laquelle est fixé le dernier organe d'entraînement est tubulaire et la tige (7) destinée à mettre en prise le rapport de marche arrière est montée coaxialement à cette tige et à l'intérieur de celle-ci.
